# EUROPÄISCHE PATENTSCHRIFT

(11) **EP 2 709 739 B1**
(45) Veröffentlichungstag und Bekanntmachung des Hinweises auf die Patenterteilung: **04.07.2018**
(21) Anmeldenummer: 12722354.3
(22) Anmeldetag: 16.05.2012
(51) Int. Cl.: A63H 11/18, G01M 17/007, G09B 9/00, G09B 9/04, G09B 19/14, G09B 23/30, A63H 13/04

(54) **DUMMY-OBJEKT, INSBESONDERE ZUR FUNKTIONSÜBERPRÜFUNG VON FAHRERASSISTENZSYSTEMEN IN KRAFTFAHRZEUGEN**
DUMMY OBJECT, IN PARTICULAR FOR FUNCTIONALLY TESTING DRIVER ASSISTANCE SYSTEMS IN MOTOR VEHICLES
OBJET FACTICE, EN PARTICULIER POUR LA VÉRIFICATION DU FONCTIONNEMENT DE SYSTÈMES D'AIDE À LA CONDUITE DANS DES VÉHICULES À MOTEUR

(30) Priorität: 18.05.2011 AT 7052011
(43) Veröffentlichungstag der Anmeldung: 26.03.2014
(73) Patentinhaber: 4activeSystems GmbH, 8772 Traboch (AT)
(72) Erfinder: FRITZ, Martin, A-8720 Kobenz (AT)
(74) Vertreter: Dilg, Haeusler, Schindelmann Patentanwaltsgesellschaft mbH
(86) Internationale Anmeldenummer: PCT/EP2012/059203
(87) Internationale Veröffentlichungsnummer: WO 2012/156484

(56) Entgegenhaltungen:
- EP-A1- 1 734 352
- WO-A2-01/60474
- DE-A1-102008 025 539
- DE-B4-102007 035 474
- FR-A1- 2 680 902
- US-A- 3 098 319
- US-A- 3 583 098
- US-A- 5 224 896
- US-A1- 2005 155 441

## Beschreibung

Die Erfindung betrifft ein dreidimensionales Dummy-Objekt, insbesondere zur Funktionsüberprüfung von Fahrerassistenzsystemen in Kraftfahrzeugen, mit einem Kopf, einem Skelett, einem Rumpf, beweglichen Armen und beweglichen Beinen.

Es ist bekannt, in Kraftfahrzeuge Fahrerassistenzsysteme einzubauen, welche eine Sensorik umfassen, die zur Umfelddetektion des Kraftfahrzeuges vorgesehen ist. Derartige Fahrerassistenzsysteme sollen kritische Verkehrssituationen erkennen und den Fahrzeuglenker warnen, sodass Unfälle vermieden werden können. Des Weiteren können Fahrerassistenzsysteme Unfallfolgen vermeiden oder abschwächen, indem bestimmte Komponenten des Fahrzeuges, wie beispielsweise die Bremse, die Lenkung oder die Airbags, situationsangepasst aktiviert werden.

Ein System zur Funktionsprüfung eines Fahrerassistenzsystems ist beispielsweise aus der DE 10 2007 035 474 B4 bekannt. Das Fahrzeug, welchem das zu prüfende Fahrerassistenzsystem zugeordnet ist, ist auf einer Prüfstrecke bewegbar und erhält und verarbeitet Informationen über die Fahrzeugumgebung. Das System umfasst ferner zumindest ein starres Dummy-Objekt, welches zur Simulation einer realen Verkehrssituation auf der Prüfstrecke derart verfahrbar ist, dass es sich zumindest zeitweise in dem von dem Fahrerassistenzsystem erfassbaren Umgebungsbereich befindet. Das Dummy-Objekt, welches separat vom Fahrzeug und unabhängig von der Bewegung des Fahrzeuges bewegbar ist, ist an einer Schienenvorrichtung angeordnet, sodass eine mechanisch stabile Anbringung des Dummy-Objekts gewährleistet ist und eine geführte Verschiebung des Dummy-Objekts in reversibler und reproduzierbarer Weise möglich ist.

Aus der US 2005/0155441 A1 ist ein System zur Simulation von Kollisionen eines Dummy-Objektes mit einem Kraftfahrzeug bekannt. Das an einem Schienensystem auf Seilen aufgehängte und in eine Bewegung quer zur Fahrtrichtung des herannahenden Kraftfahrzeuges verfahrbare Dummy-Objekt imitiert einen menschlichen Körper und weist einen Kopf, einen Hals, einen Rumpf sowie Arme und Beine auf. In seinem Inneren befindet sich ein Skelett aus Holz.

Die DE 10 2008 025 539 A1 offenbart eine Testvorrichtung für ein Fußgängerschutzsystem in einem Kraftfahrzeug, welches sich längs eines Fahrweges bewegt. Es ist ein Dummy-Objekt vorgesehen, welches einen Fußgänger simuliert und quer zum Fahrweg des Kraftfahrzeuges verfahrbar ist. Das Dummy-Objekt ist im Wesentlichen zweidimensional ausgebildet und weist einen Rumpf, zwei Beine und zumindest einen Arm auf. Zumindest eines der beiden Beine und/oder zumindest einer der Arme ist bzw. sind relativ zum Rumpf durch eine Aktuatorik über Seile und/oder Gestänge bewegbar. Dabei sind die Beine und zumindest der eine vorgesehene Arm nach der Art eines Hampelmanns am Rumpf beweglich gelagert, sodass die Arme sowie die Beine nach vorne und hinten in Schwenkbewegung versetzt werden können. Der Rumpf, die Arme und die Beine sind aus Kunststoffplatten, welche eine Stärke von etwa 3 mm aufweisen, hergestellt und an der dem Fahrzeug zugewandten Seite mit Schaumstoff beschichtet.

Das Bewegungsverhalten von Fußgängern im Straßenverkehr ist jedoch wesentlich komplexer. Es sind grundsätzlich drei Bewegungsgrundformen beobachtbar, nämlich Gehen, Laufen und Rennen. Gehen ist jene Fortbewegungsart, die im Straßenverkehr am häufigsten anzutreffen ist. Ein Fuß berührt dabei immer den Boden, der andere Fuß setzt vor dem Körper auf, die Gliedmaßen sind annähernd gestreckt und der Oberkörper bleibt im Wesentlichen gerade. Beim Laufen sind kurzzeitig beide Füße ohne Bodenkontakt und die Schrittweite ist größer als beim Gehen. Der eine Fuß setzt meist direkt unter dem Körper auf, der Oberkörper bleibt weitgehend gerade oder ist in leichter Vorlage. Die Geschwindigkeit kann über einen längeren Zeitraum konstant sein. Sehr häufig sind im Straßenverkehr laufende Kinder anzutreffen, welche anfangs durch ein Objekt, beispielsweise ein parkendes Fahrzeug verdeckt sind. Bei der dritten Fortbewegungsart, dem Rennen, kann die Geschwindigkeit nur über einen relativ kurzen Zeitraum aufrechterhalten werden. Die Füße verlieren den Bodenkontakt und setzen unter dem Körper mit dem Fußballen auf, die Schrittweite ist sehr groß, der Oberkörper verlagert sich deutlich nach vorne.

Bei aktiven Fahrerassistenzsystemen, welche die Fahrzeuginsassen entweder vor gefährlichen Situationen warnen oder selbstständig in das Fahrgeschehen eingreifen, ist es erforderlich, ihre Funktionssicherheit mit geeigneten Methoden unter Verwendung von Dummy-Objekten zu prüfen. Es sind Prüfmethoden und Dummy-Objekte erforderlich, die möglichst realitätsnah die entsprechenden Verkehrssituationen, die auftreten können, wiedergeben. Bei der Fußgängererkennung wird der Detektionsvorgang üblicherweise in zwei Schritten durchgeführt. Bei der Initialdetektion ist es wichtig, dass möglichst alle Fußgänger im relevanten Umgebungsbereich erfasst werden. Dabei wird in Kauf genommen, dass Objekte auch fehlerhaft als mögliche Fußgänger detektiert werden. Beim zweiten Schritt, der Klassifikation, werden die detektierten Objekte als Fußgänger oder als Nicht-Fußgänger klassifiziert. Zur Klassifikation werden zeitabhängige Merkmale der detektierten Objekte, wie zum Beispiel Beinbewegungen, zur Zuordnung verwendet. Werden nun zweidimensionale Testobjekte, wie sie beispielsweise aus der DE 10 2008 025 539 A1 bekannt sind, als Dummy-Objekte verwendet, kann sich bei der Nachstellung einer einfachen Fußgängerüberquerung ihr Ansichtswinkel in Folge der Herannäherung des Fahrzeuges um bis zu 60° ändern. Dabei würde ein zweidimensionales Objekt von einer nur die Silhouette beschreibenden Kontur in eine Linienkontur übergehen. Dies würde bei der Entwicklung und Überprüfung von Fahrerassistenzsystemen zu falschen Daten führen.

US 5,224,896 offenbart eine motorisierte, gehfähige Puppe, die einen Torso mit einer oberen Nacken- und Schulterende und einem unteren Becken- und Hüftende, einem Kopf, der von dem Nacken- und Schulterende getragen wird, ein Paar von rechtem und linkem Arm, die am Torso neben dem Nacken- und Schulterende verschwenkbar angelenkt sind, und ein Paar von rechten und linken Beinen, die jeweils einen oberen Oberschenkelabschnitt, einen mittleren Wadenabschnitt und einen unteren Fuss- oder Schuhabschnitt umfassen und die am Beckenund Hüftende schwenkbar angelenkt sind. Im Torso aufgenommen sind ein Batteriekasten, eine sich vom Batteriekasten nach oben erstreckende Montagesäule, ein oberhalb des Batteriekastens angeordneter Gleichstrommotor mit einer Ausgangswelle, ein mit der Ausgangswelle drehfest gekoppeltes Untersetzungsgetriebe mit einer vorderen Mitnehmerscheibe und eine von der Mitnehmerscheibe angetriebener Nockenfolgerverbindung. In jedem Beinen ist ein Parallelogrammkoppelgetriebe aufgenommen. Wenn eine Bewegung der Puppe über die Nockenfolgerverbindung und das Parallelogrammkoppelgetriebe angetrieben wird, bewegen sich die Schuhabschnitte parallel zur Bodenfläche, auf der die Puppe getragen ist, vorwärts (und rückwärts), und zwar abwechselnd und um 180° außer Phase. Am Torso ist ein Multi-Positionsschalter mit einem von außen betätigbaren Aktuator vorgesehen. Durch Betätigen des Schalters kann die Drehgeschwindigkeit des Motors zwischen einer höheren und einer niedrigeren Geschwindigkeit umgeschaltet werden, so dass zwei Gangarten, nämlich Gehen und Laufen, verwirklicht sind, die sich lediglich durch die Schrittfrequenz unterscheiden. Beim Gehen oder Laufen bleiben der Verschwenkgrenzwinkel der inneren Verbindungselemente und die Schrittweite der Schuhabschnitte jeweils konstant und unabhängig von der Drehgeschwindigkeit des Motors bzw. der Schrittfrequenz der selbstgehenden Puppe.

Es ist daher wesentlich, Dummy-Objekte dreidimensional und möglichst menschenähnlich auszuführen und möglichst realitätsnah zu bewegen. Hier setzt nun die Erfindung ein, deren Aufgabe darin besteht, ein Dummy-Objekt, welches insbesondere als Fußgänger oder Radfahrer zur Funktionsüberprüfung von Fahrerassistenzsystemen in Kraftfahrzeugen einsetzbar ist, zur Verfügung zu stellen, mit welchem eine möglichst realitätsnahe Bewegungscharakteristik vor allem in den Bewegungsarten Gehen, Laufen und Rennen nachstellbar ist, welches als dreidimensionales Objekt aus allen Ansichtswinkeln eine möglichst realitätsnahe optische Darstellung und Radarreflexion ermöglicht und sowohl das äußere Bewegungsverhalten als auch die innere Bewegungscharakteristik zumindest der Beinbewegungen wiedergeben kann.

Wie in Anspruch 1 definiert, wird die gestellte Aufgabe gelöst durch ein dreidimensionales Dummy-Objekt, das ein Skelett, bewegliche Arme und bewegliche Beine aufweist, wobei das Skelett ein Hohlräume aufweisendes Rumpfskelett mit einer zentralen Säule aufweist, wobei die Arme und Beine mit dem Rumpfskelett gelenkig verbunden sind, wobei die Beine jeweils einen Oberschenkel und einen mit diesem gelenkig verbundenen Unterschenkel aufweisen, wobei im Rumpfskelett eine Antriebseinheit und eine Empfänger/Steuereinheit eingebaut sind,
welche als Eingangsgröße mit der Relativgeschwindigkeit des bewegten Dummy-Objekts korrelierende Signale erhält. Erfindungsgemäß sind die Bewegungsmuster der Ober- und
Unterschenkel in Abhängigkeit von der Relativgeschwindigkeit des Dummy-Objekts mittels eines eingebauten Bewegungsmechanismus veränderbar, wobei die Bewegungsmuster der Beine Änderungen der Beingrenzwinkel zwischen dem Oberschenkel und der zentralen Säule des Rumpfskeletts und der Kniegrenzwinkel zwischen dem Oberschenkel und dem Unterschenkel beinhalten.

Ein erfindungsgemäßes Dummy-Objekt ist daher derart ausgeführt, dass eine sehr realitätsnahe innere Bewegungscharakteristik zumindest der Beinbewegungen passend zu bestimmten Bewegungsmustern, beispielsweise jenen des Gehens, Laufens und Rennens, möglich ist. Der Skelettaufbau des Dummy-Objekts mit einem Rumpfskelett ermöglicht eine hochfeste, stoßunempfindliche und sehr leichte Ausführung und den Einbau der Antriebseinheit und der Steuereinheit und, falls erforderlich, des Empfängers.

Bei einer bevorzugten Ausführungsform der Erfindung weist das Dummy-Objekt ferner einen Kopf, der von der zentralen Säule getragen wird, auf, und das Rumpfskelett weist zusätzlich zu der den Kopf tragenden zentralen Säule zwei Schulterteile und zwei Beckenteile auf und ist einteilig ausgeführt. Dies ermöglicht eine stabile und gleichzeitig leichte Ausführung des Rumpfskeletts.

Dass die Bewegungsmuster der Beine Änderungen der Beingrenzwinkel zwischen dem Oberschenkel und der zentralen Säule des Rumpfskeletts und der Kniegrenzwinkel zwischen dem Ober- und dem
Unterschenkel umfassen, ist für eine möglichst realitätsgetreue Nachstellung der je nach Gangart - Gehen, Laufen und Rennen - unterschiedlichen Bewegungsmuster vorgesehen.

Bei einer bevorzugten Ausführungsform des erfindungsgemäßen Dummy-Objekts weisen die Arme jeweils einen Oberarm und einen mit diesem gelenkig verbundenen Unterarm auf, wobei Oberarm und Unterarm nach Bewegungsmustern bewegbar sind, welche in Abhängigkeit von der Relativgeschwindigkeit des Dummy-Objekts mittels eines eingebauten
Bewegungsmechanismus veränderbar sind. Bei einem derart ausgeführten Dummy-Objekt können daher auch die Armbewegungen weitgehend realitätsgetreu nachgestellt werden, insbesondere dann, wenn die Bewegungsmuster der Arme Änderungen der Armwinkel zwischen dem Oberarm und der zentralen Säule des Rumpfskeletts und der Ellbogenwinkel zwischen dem Oberarm und dem Unterarm umfassen.

Für eine optimale Nachstellung der Arm- und Beinbewegungen ist es vorteilhaft, wenn das Dummy-Objekt weitere Skelettteile, insbesondere in jedem Oberarm je ein Oberarmgelenk und in jedem Oberschenkel je ein Oberschenkelelement, aufweist.

In den hohl ausgeführten Bestandteilen des Rumpfskeletts lässt sich neben der Antriebseinheit und der Steuereinheit bzw. der Empfängereinheit auch ein Akkupack mit wiederaufladbaren Akkumulatoren positionieren bzw. einbauen.

Die von außen sichtbaren Körperteile des Dummy-Objekts sollen möglichst realitätsnahe Nachbildungen der entsprechenden menschlichen Körperteile darstellen. Dies ist insbesondere dadurch möglich, wenn gemäß einer bevorzugten Ausführungsform des Dummy-Objekts der Kopf, die Arme und/oder die Beine und/oder zumindest ein Teil des Rumpfes Formteile aus EPP oder EPE sind. Dabei lassen sich die Arme und/oder die Beine und/oder zumindest ein Teil des Rumpfes auch als aufblasbare Kunststoffhohlkörper ausführen. Die Skelettteile sollen aus einem radar-sichtbaren, stabilen und trotzdem leichten Material bestehen. Es ist daher besonders vorteilhaft, wenn die Skelettteile aus CFK gefertigt sind.

Erfindungsgemäß ausgeführte Dummy-Objekte können an unterschiedliche Bewegungssysteme angekoppelt werden. Das Bewegungssystem ist ein Teil des Gesamtsystems und ermöglicht eine kontrollierte und reprodierbare Bewegung des Dummy-Objekts.

Bekannt sind insbesondere Bewegungssysteme, bei welchen das Dummy-Objekt von oben über ein Schienensystem oder dergleichen bewegt wird. Von Vorteil ist es, wenn entsprechende Anbindungs- oder Kopplungselemente bereits am Dummy-Objekt selbst vorgesehen sind. So kann beispielsweise die zentrale Säule mit einer den Kopf überragenden Stange fest verbunden sein, welche ein Anbindungselement zu einem Bewegungssystem, insbesondere einem solchen, welches ein Schienensystem aufweist, bildet. Mit dieser Anbindung kann das Dummy-Objekt sehr schnell aus dem Kollisionbereich gezogen werden.

Des Weiteren können Seile, insbesondere aus Aramid-Fasern, PP-Fasern oder PE-Fasern vorgesehen sein, welche mit der zentralen Säule des Skeletts oder der Stange verbunden sind und weitere Anbindungselemente zum Bewegungssystem bilden.

Der Bewegungsmechanismus im Dummy-Objekt besteht aus einer Vielzahl von Einzelkomponenten, die gemäß den gewünschten Bewegungsabläufen entsprechend bewegt bzw. angesteuert werden. Besonders variabel ist ein Bewegungsmechanismus, dessen Einzelne, die Körperteile bewegenden Komponenten Servoantriebe sind, welche in den Gelenken angeordnet sind.

Möglich sind auch Ausführungsvarianten, bei denen eine Koppelung der Bewegung der Unterarme mit den Oberarmen oder der Unterschenkel mit den Oberschenkeln über mechanisch arbeitende Wirkverbindungen bzw. Mechanismen erfolgt.

Bei einer bevorzugten Ausführungsvariante eines solchen Koppelungsmechanismus für eine Zwangskoppelung zur Bewegung der Unterschenkel oder der Unterarme ist jeweils ein mit dem Rumpfskelett fest verbundener Kulissenteil vorgesehen, welcher einen mit dem Ellbogengelenk bzw. dem Kniegelenk fest verbundenen Gelenkarm, ein starres Verbindungselement zwischen Gelenkarm und Kulissenteil und ein elastisches Verbindungselement zwischen dem Gelenkarm und dem Rumpfskelett bzw. einem mit diesem fest verbundenen Skelettteil aufweist.

Das starre Verbindungselement weist ein mit dem Kulissenteil verbundenes Gleitelement auf, welches an zwei unterschiedlich geformten Kulissenbahnen des Kulissenteils abfahren kann. Durch eine entsprechende Auslegung des Verlaufs der Kulissenbahnen lässt sich derart bei einer Bewegung der Oberschenkel bzw. der Oberarme die entsprechende Bewegung der Unterschenkel bzw. der Unterarme realitätsgetreu mitführen bzw. anpassen.

Bei einer weiteren Ausführungsform der Erfindung weist der im Dummy-Objekt eingebaute Bewegungsmechanismus eine Antriebseinheit mit einem Motor mit asynchronem Antrieb auf, welcher zwei Wellen antreibt, die über Winkelgetriebe die Schultergelenke und die Hüftgelenke in Drehbewegung versetzen.

Das Dummy-Objekt gemäß der Erfindung lässt sich auch mit anderen Bewegungssystemen verfahren bzw. bewegen. Bei einem Bewegungssystem, welches im Wesentlichen analog einer Seilbahn ein Tragseil und ein Zugseil verwendet, kann der Rumpf des Dummy-Objekts derart ausgeführt sein, dass er in einem der Seile, insbesondere dem Tragseil des en Bewegungssystems, gleitend bzw. rollend aufhängbar ist.

Weitere Merkmale, Vorteile und Einzelheiten der Erfindung werden nun anhand der schematischen Zeichnung, die Ausführungsbeispiele darstellt, näher beschrieben. Dabei zeigen
- Fig.1: eine Vorderansicht eines erfindungsgemäß ausgeführten Dummy-Objekts,
- Fig. 2: das Dummy-Objekt in Schrägansicht in einer Bewegungsphase,
- Fig. 3 bis Fig. 6: das Dummy-Objekt beim Stehen, Gehen, Laufen und Rennen,
- Fig. 7: das Dummy-Objekt in Seitenansicht in einer Bewegungsphase,
- Fig. 8, 9 und 10: Diagramme zur Bewegungscharakteristik der Beine des Dummy-Objekts,
- Fig. 11 und Fig. 12a bis 12c: Darstellungen des Grundprinzips einer Ausführungsvariante eines Bewegungsmechanismus,
- Fig. 13a bis 13f: aufeinanderfolgende Bewegungsphasen der Beinbewegungen des in Fig. 11 gezeigten Mechanismus,
- Fig. 14: eine Ansicht des Skeletts des Dummy-Objekts mit einer weiteren Ausführungsform eines Bewegungsmechanismus für Arme und Beine,
- Fig. 15: eine Ansicht des Grundprinzips einer Ausführungsform eines Bewegungssystems für das Dummy-Objekt und
- Fig. 16, 16a und 17: Ansichten von Grundprinzipien von weiteren Ausführungsformen von Bewegungssystemen für das erfindungsgemäße Dummy-Objekt.

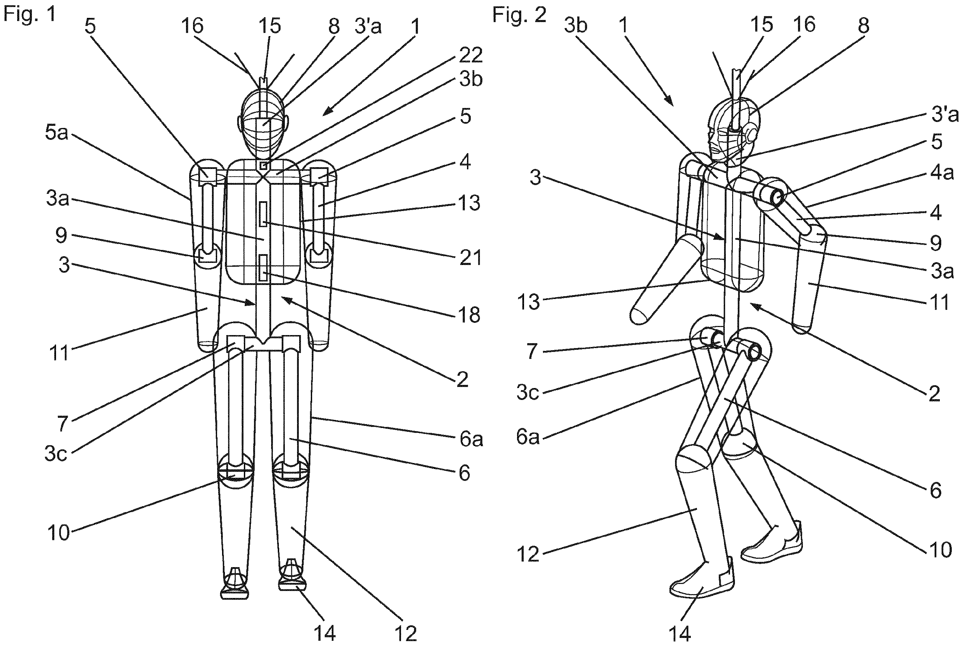

Die Figuren zeigen beispielhaft ein einen Fußgänger simulierendes Dummy-Objekt 1. Das Dummy-Objekt 1 weist einen dreidimensionalen Körper auf und simuliert in der dargestellten Ausführungsform einen Erwachsenen durchschnittlicher Körpergröße. Erfindungsgemäß ausgeführte Dummy-Objekte 1 werden in unterschiedlichen Größen bzw. Dummy-Klassen hergestellt, um beispielsweise Kinder im Alter von 3 und 6 Jahren, Erwachsene und Senioren darzustellen. Das Dummy-Objekt 1 weist ein Skelett 2 aus einem Rumpfskelett 3, zwei Oberarmelementen 4 und zwei Oberschenkelelementen 6 auf. Das Rumpfskelett 3 ist vorzugsweise einteilig ausgeführt und setzt sich aus einer senkrecht stehenden zentralen Säule 3a, welche im Wesentlichen der menschlichen Wirbelsäule entspricht, zwei unter einem insbesondere im rechten Winkel von dieser abragenden Schulterteilen 3b und zwei ebenfalls unter einem insbesondere rechten Winkel von dieser abragenden Beckenteilen 3c, zusammen, die kürzer ausgeführt sind als die Schulterteile 3b. Die zentrale Säule 3a weist einen die Schulterteile 3b überragenden kurzen Halsabschnitt 3'a auf, welcher einen Kopf 8 trägt. Die Bestandteile des Rumpfskeletts 3, die Oberarmelemente 4 und die Oberschenkelelemente 6 sind insbesondere als Rohre aus einem radar-sichtbaren, wasserdichten, hochfesten und stoßunempfindlichen Material gefertigt, vorzugsweise aus CFK (Kohlenstofffaser verstärktem Kunststoff). In den Hohlräumen des Rumpfskeletts 3, insbesondere im Inneren der zentralen Säule 3a, sind, wie es Fig. 1 zeigt, eine Antriebseinheit 18 mit zumindest einem Motor, eine Empfänger/Steuereinheit 22 und eine Spannungsversorgung, insbesondere ein Akkupack 21 mit aufladbaren Akkumulatoren, untergebracht. Von außen zugängliche, verschließbare Öffnungen im Rumpfskelett 3 gestatten den Einbau, den Austausch und die Wartung dieser Komponenten.

Die Oberarmelemente 4 und die Oberschenkelelemente 6 sind mit jeweils einem Schultergelenk 5 bzw. einem Hüftgelenk 7 mit je einem Schulterteil 3b bzw. einem Beckenteil 3c des Rumpfskelettes 3 verbunden.

Der Kopf 8 ist ein aus EPP (expandiertes Polypropylen) oder EPE (expandiertes Polyethylen) gefräster oder formgeschäumter, dem menschlichen Kopf nachempfundener Teil, welcher mit dem Rumpfskelett 3 fest verbunden ist. An der Kopfoberfläche können elektrisch beheizbare Matten (Widerstandsheizmatten) angebracht sein, um den Kopf 8 via Infrarotkamerasysteme darstellbar zu machen. Die Kopfaußenseite ist überzogen bzw. versiegelt, beispielsweise mit hautfarbenem Naturkautschuk oder Silikon. An den Oberarmelementen 4 sind über Ellbogengelenke 9 Unterarme 11, an den Oberschenkelelementen 6 über Kniegelenke 10 Unterschenkel 12 angebracht, wobei die Unterarme 11 und die Unterschenkel 12 keine Skelettteile beinhalten. Ein die Schulterteile 3b und die zentrale Säule 3a großteils bedeckender Rumpf 13 ist ein dem menschlichen Brustkorb nachempfundener Teil, welcher entweder ein aus EPP, EPE oder PU(Polyurethan)-Schaum in Kreuzrippenbauweise hergestellter, gefräster oder geschnittener Formteil oder ein aus PVC bestehender aufblasbarer Bauteil oder ein Formschaumteil ist. Der Rumpf 13 schützt das Rumpfskelett 3 vor Beschädigungen bei einem etwaigen unbeabsichtigten Zusammenprall des Dummy-Objekts 1 mit einem Fahrzeug. Die Oberarmelemente 4 sind von Oberarmen 4a, die Oberschenkelelemente 6 von Oberschenkeln 6a umhüllt. Die Oberarme 4a, die Unterarme 11, die Oberschenkel 6a und die Unterschenkel 12 sind den entsprechenden menschlichen Körperteilen nachgebildete, leicht konisch geformte Bauteile, welche entweder aufblasbare, insbesondere aus PVC bestehende Hohlkörper oder aus EPP oder EPE hergestellte, durch Fräsen oder Schneiden in entsprechende Form gebrachte Teile sind. An den freien Endabschnitten der Unterarme 11 können elektrisch beheizbare Matten (Widerstandsheizmatten) angebracht sein, um eine Darstellung der "Handpartien" mittels Infrarotkamerasystemen zu gestatten. Die Unterschenkel 12 sind mit Fußteilen 14 starr verbunden, welche insbesondere Bestandteile der Unterschenkel 12 sind. Die Gelenke 5, 7, 9 und 10 sind insbesondere wartungsarme, stoßunempfindliche Gleit-Radiallager aus Kunststoff, beispielsweise aus Polyamid (PA) oder aus Polyoxymethylen (POM).

Der Kopf 8 kann von einer Stange 15, welche beispielsweise aus laminierten Glasfasern oder Aramid-verstärktem Kunststoff besteht, durchsetzt sein, die mit dem Rumpfskelett 3 fest verbunden ist. Mit der Stange 15 sind Seile 16, insbesondere aus Aramid-Fasern, PP-Fasern oder PE-Fasern verbunden, welche gemeinsam mit der Stange 15 die Anbindungselemente des Dummy-Objekts 1 an einem Bewegungssystem, wie es weiter unten beschrieben wird, bilden. Nicht dargestellt ist eine Umhüllung des Dummy-Objekts 1 mit textiler, wasserdichter Bekleidung mit vorzugsweise geringem Gewicht. Die Bekleidung kann mehrteilig, insbesondere aus Hose und Oberteil, oder einteilig, analog einem Overall, ausgeführt sein und mit Schuh-Nachbildungen versehen sein.

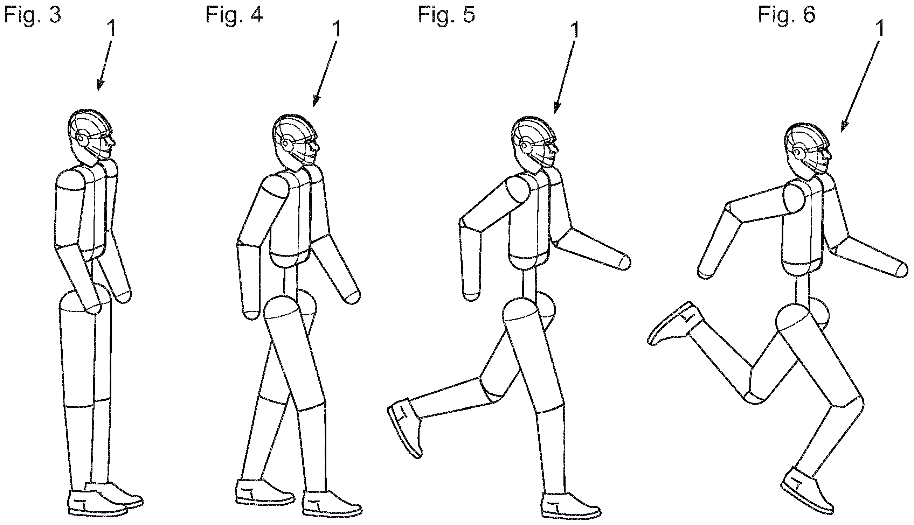

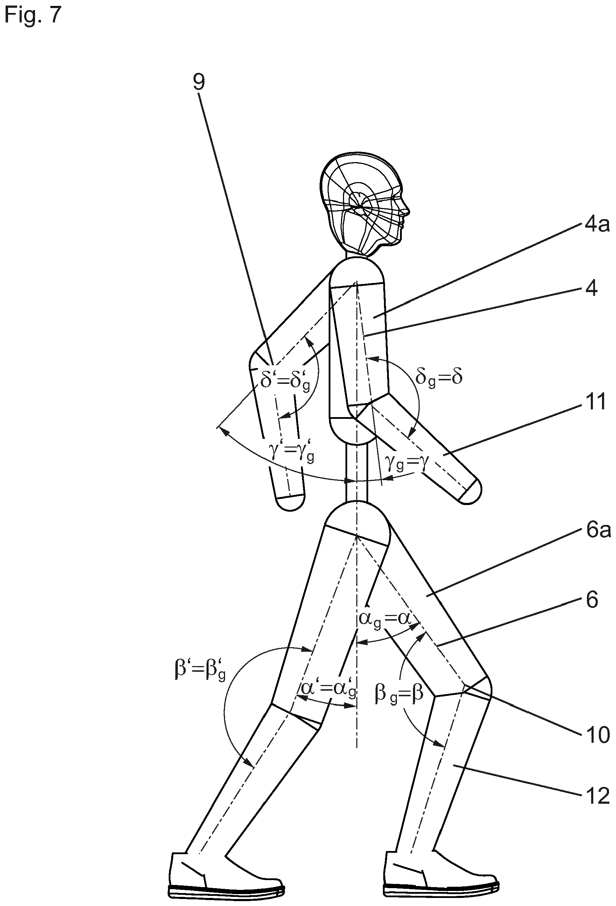

Die Bewegungen, die das Dummy-Objekt 1 ausführen kann, sind zumindest den Beinbewegungen, vorzugsweise auch den Armbewegungen, eines Menschen nachgestellte Bewegungen. Die Bein- und Armbewegungen werden in Abhängigkeit von der Relativgeschwindigkeit Vᵣₑₗ gesteuert, jener Geschwindigkeit, mit der sich das Dummy-Objekt 1 in Dummy-Objekt-Blickrichtung (siehe Fig. 7) relativ zu einem Fixpunkt bewegt. Die Bestimmung bzw. Ermittlung der Relativgeschwindigkeit Vᵣₑₗ erfolgt innerhalb des Gesamtsystems (Bewegungssystems), in welches das Dummy-Objekt 1 eingebracht wird, beispielsweise mit einem Transpondersystem, einem Ultraschall- oder Infrarotmesssystem, einem Lasertriangulationsmesssystem, einem Differenz-GPS, einem Lichtschrankensystem, Laufrollen oder Drehzählmessung und dergleichen. Zu Beginn eines Bewegungsablaufes steht das Dummy-Objekt 1 mit parallel ausgerichteten Beinen, wie es in Fig. 3 gezeigt ist, die Relativgeschwindigkeit beträgt 0 m/s. Sobald die Relativgeschwindigkeit Vᵣₑₗ ansteigt, beginnt die Bewegung des Dummy-Objekts 1 durch Bewegen des rechten oder linken Beines, gegengleich zu den Beinen erfolgt vorzugsweise auch eine Bewegung der Arme. Die für den Bewegungsablauf maßgebliche Eingangsgröße ist vorzugsweise ausschließlich die Relativgeschwindigkeit Vᵣₑₗ, welche je nach Dummy-Klasse (Kind, Erwachsener, Senior) variiert wird. Fig. 4 zeigt das Dummy-Objekt 1 beim Gehen, Fig. 5 beim Laufen und Fig. 6 bei sehr schnellem Lauf bzw. beim Rennen, wobei in den Figuren 3 bis 6 die einzelnen Bestandteile des Dummy-Objekts 1 nicht bezeichnet sind.

Für ein möglichst realitätsgetreues Nachstellen von Bewegungsmustern wird außerdem die Dummy-Klassifizierung berücksichtigt, nämlich ob das jeweilige Dummy-Objekt 1 beispielsweise ein Kind von 3 oder 6 Jahren, einen Erwachsenen oder einen Senior darstellt. Jede Dummy-Objekt-Klasse weist andere Bewegungsabläufe in den Bewegungsmustern auf. Entsprechende Programme steuern gemäß den Bewegungsabläufen die Antriebseinheit und die Komponenten der Bewegungsmechanismen.

Fig. 7 zeigt eine Seitenansicht des Dummy-Objekts 1 mit den sich je nach Bewegungsmuster (Gehen, Laufen, Rennen) unterschiedlich großen Winkeln α_{g}, α'_{g}, α, α', β_{g}, β'_{g}, β und β'. Die mit "α" bezeichneten Winkel sind Beinwinkel - Winkel zwischen dem Oberschenkelelement 4 und der Senkrechten (der zentralen Säule 3a) - die mit "β" bezeichneten Winkel sind Kniewinkel - Winkel zwischen dem Oberschenkelelement 4 und einer zentralen Linie durch den Unterschenkel 12. Die Winkel α_{g}, α'_{g}, β_{g} und β'_{g} sind die jeweiligen Grenzwinkel, die am jeweiligen Umkehrpunkt der Beinbewegungen vorliegen. In Fig. 7 befindet sich das Dummy-Objekt 1 beispielhaft in einem Bewegungsstadium mit Grenzwinkeln. Mit steigender bzw. fallender Relativgeschwindigkeit Vᵣₑₗ ändern sich analog zur Bewegung eines menschlichen Körpers die Beingrenzwinkel α_{g}, α'_{g} sowie die von diesen Winkeln abhängigen Kniegrenzwinkel β_{g}, β'_{g}, die Schrittfrequenz und die Schrittweiten. Analoge Betrachtungen gelten für die Armgrenzwinkel γ_{g}, γ'_{g} sowie die Ellbogengrenzwinkel δ_{g}, δ'_{g}, die in Fig. 7 eingezeichnet sind. Die Winkel γ_{g}, γ'_{g} werden zwischen den Oberarmelementen 4 und der Senkrechten (der zentralen Säule 3a), die Winkel δ_{g}, δ'_{g} zwischen den Oberarmelementen 4 und einer zentralen Linie durch die Unterarme 11 ermittelt. Die Winkel γ, γ', δ und δ' sind die sich jeweils während der Bewegung ändernden Winkel.

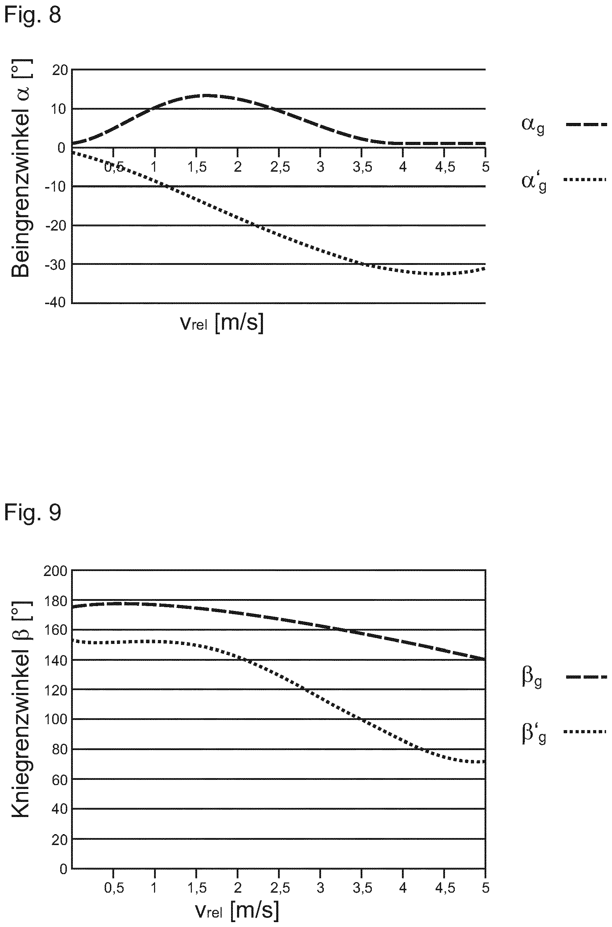

Die Figuren 8 und 9 zeigen Diagramme mit der Bewegungscharakteristik eines Dummy-Objekts 1, welches als "Erwachsener" klassifiziert ist. Fig. 8 zeigt die Beingrenzwinkel α_{g} und α'_{g}, Fig. 9 die Kniegrenzwinkel β_{g} und β'_{g}, jeweils in Abhängigkeit von der Relativgeschwindigkeit Vᵣₑₗ. Der Bewegungsablauf wird derart gesteuert, dass zwischen dem auftretenden Fuß und dem Boden ein Abstand von maximal 5 cm eingehalten wird und keine Relativbewegung stattfindet.

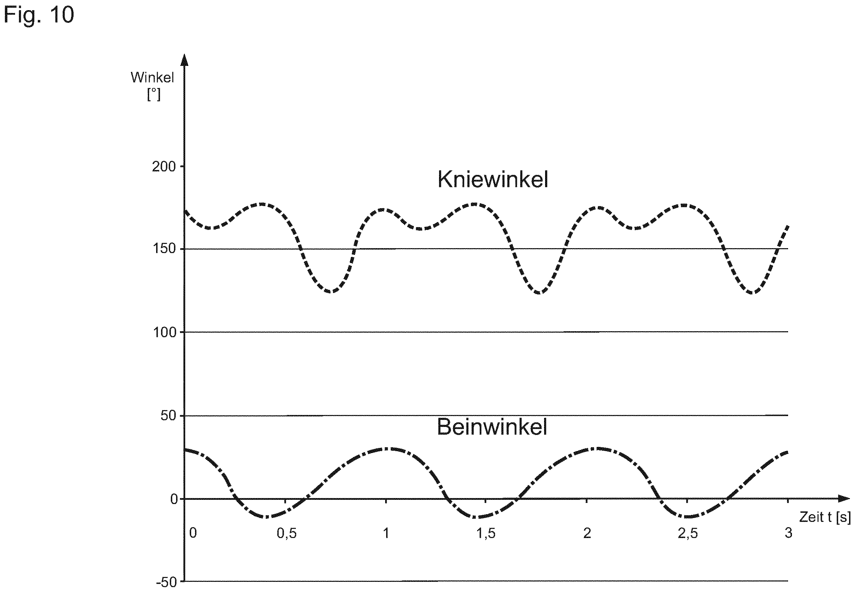

Das Diagramm in Fig. 10 zeigt beispielhaft die Änderung der Beinwinkel α, α' und der Kniewinkel β, β' während einer Schrittfolge aus drei Schritten eines als "Erwachsenen" klassifizierten Dummy-Objekts 1 beim Gehen. Die Beinwinkel α, α' ändern sich zwischen den beiden Beingrenzwinkeln α_{g} und α'_{g} während eines Schrittes ein Mal. Die Kniewinkel β, β' ändern sich während eines Schrittes zwei Mal, jeweils zwischen einem Kniegrenzwinkel β_{g} von ca. 180° zu zwei unterschiedlich großen Kniegrenzwinkeln β'_{g}, wobei der erste Kniegrenzwinkel β'_{g} bei ca. 160° in der Standphase und der zweite bei ca. 135° in der Schwungphase des Beins vorliegt.

Es gibt eine Vielzahl von Möglichkeiten, einen Bewegungsmechanismus zur Bewegung der Arme und Beine des Dummy-Objekts 1 auszuführen. Bei einer möglichen Ausführungsvariante wird jedes Gelenk 5, 7, 9 und 10 durch einen eigenen Servoantrieb - Servomotoren mit Servoreglern - separat bewegt. Die Beinwinkel "α" und die Kniewinkel "β" sowie die Armwinkel "γ" und "δ" sind unabhängig voneinander elektrisch steuerbar. Die eingesetzten Servoantriebe sowie die mit diesen zusammenarbeitenden Komponenten sollen ein möglichst geringes Gewicht aufweisen. Sind gemäß einer weiteren, nicht dargestellten Ausführungsvariante der Erfindung am Dummy-Objekt 1 separate Handteile und Fußteile vorhanden, welche ebenfalls mittels Gelenken mit den Armen bzw. Beinen verbunden sind, so können auch diese über gesonderte Servoantriebe und unabhängig von den anderen Servoantrieben bewegt werden. Diese Ausführungsform ist somit sehr flexibel bezüglich der Wahl bzw. Programmierung der Bewegungsabläufe.

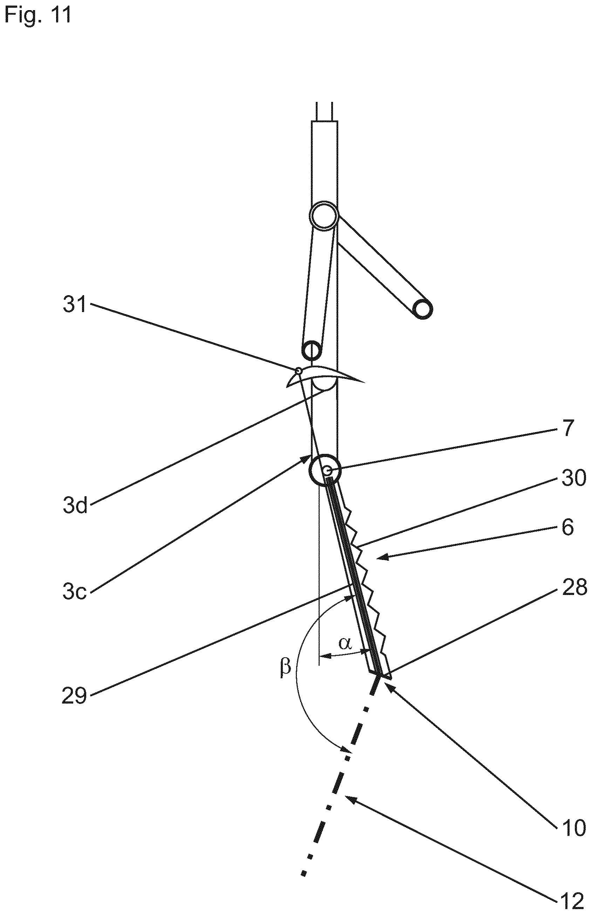

Bei einer weiteren Ausführungsvariante des Bewegungsmechanismus werden die Schultergelenke 5 und die Hüftgelenke 7 mittels separater Servoantriebe bewegt bzw. gesteuert. Die Bewegungen der Unterarme 11 und/oder der Unterschenkel 12 können durch Mechanismen erfolgen, die abhängig vom jeweiligen sich während der Bewegung einstellenden Bein- bzw. Armwinkel sind. Dabei kann auch vorgesehen sein, die Kniegelenke 10 oder die Ellbogengelenke 9 durch Servoantriebe zu steuern. Die Figuren 11, 12a bis 12c sowie die Figuren 13a bis 13f zeigen schematisch die Wirkungsweise und die Ausführung eines Mechanismus, welcher die Kniewinkel β, β' in Abhängigkeit von den Beinwinkeln α, α' steuert.

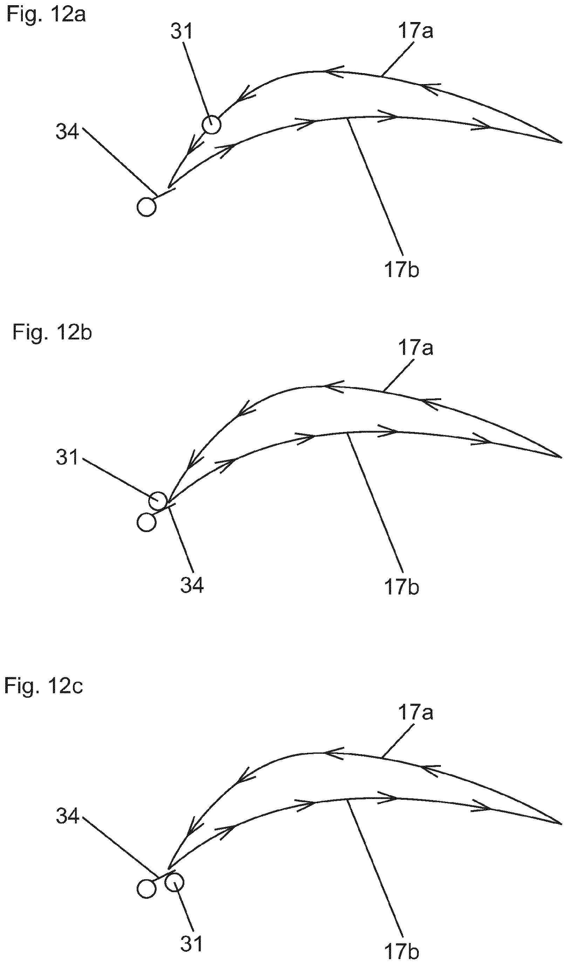

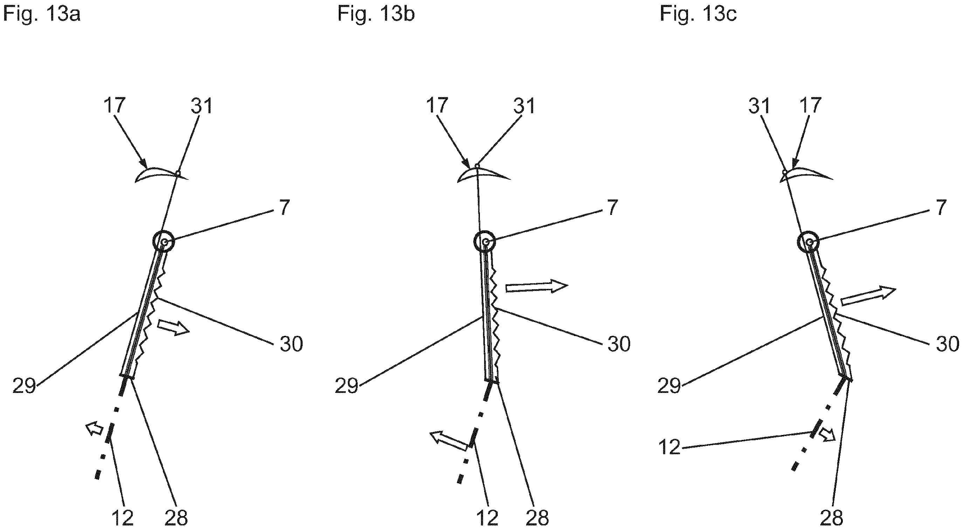

Zentrale Bestandteile jedes Mechanismus sind zwei Kulissenteile 17, welche an zwei Stützelementen 3d, die beispielsweise mit der zentralen Säule 3a fest verbunden sind, fest und undrehbar angeordnet sind. Der Kulissenteil 17 ist beispielsweise ein Aluminium- oder Kunststofffrästeil und weist zwei Kulissenbahnen 17a, 17b auf, die in den Figuren nur schematisch gezeigt sind. Die Kulissenteile 17 werden am Rumpfskelett 3 austauschbar befestigt, da für jede der vorgesehenen Bewegungsarten (Gehen, Laufen, Rennen) und jede Dummy-Klasse (Kind mit 3 Jahren, Kind mit 6 Jahren, Erwachsener, Senior) ein Kulissenteil 17 mit eigens gestalteten Kulissenbahnen 17a, 17b zu verwenden ist. Am Kniegelenk 10 ist ein Gelenkarm 28 befestigt, welcher beispielsweise ein Aluminium- oder Kunststoffteil ist und sich insbesondere in der Blickrichtung des Dummy-Objekts 1 erstreckt. Das eine Ende des Gelenkarmes 28 ist mit dem einen Ende eines starren, undehnbaren Verbindungselementes 29, welches beispielsweise ein Seil, ein Bowdenzug oder eine Stange aus Metall- oder Kunststoff ist, fest verbunden. Das andere Ende des Gelenkarmes 28 ist mit einem zweiten, elastisch nachgiebigen Verbindungselement 30, beispielsweise einem Kunststoff- oder Gummiseil oder einer Feder, verbunden. Das zweite Ende des elastischen Verbindungselementes 30 ist bei der gezeigten Ausführung am Beckenteil 3c befestigt, das zweite Ende des Verbindungselementes 29 ist mit dem Kulissenteil 17 in Wirkverbindung. Dazu ist am Ende des Verbindungselementes 29 ein Gleitelement 31, welches ein Metall- oder Kunststoffteil ist, angeordnet, welches auf den Kulissenbahnen 17a und 17b, wie noch beschrieben wird, abfährt. Das Verbindungselement 29 ist ferner derart angeordnet, dass es unabhängig von der Beinbewegung ständig parallel zum Oberschenkelelement 6 ausgerichtet ist. Ausgangspunkt für eine Bewegung des in Fig. 11 sowie in den Fig. 13a bis 13f lediglich angedeuteten Unterschenkels 12 relativ zum Oberschenkelelement 6 ist eine Drehung des Hüftgelenkes 7. Die zwei Kulissenbahnen 17a, 17b gestatten ein Ausführen der Bewegung mit den erwähnten unterschiedlich großen Kniegrenzwinkeln β_{g}, β'_{g}. Das Gleitelement 31 bewegt sich entlang der Kulissenbahn 17a in Pfeilrichtung (Fig. 12a bis Fig. 12e), wenn sich der Oberschenkel 6a in Gehrichtung nach vorne bewegt. Die Kulissenbahn 17b wird vom Gleitelement 31 dann abgefahren, wenn sich der Oberschenkel 6a gegen die Gehrichtung bewegt. Die Kulissenbahnen 17a und 17b werden den jeweiligen Dimensionen und den erwünschten Winkeländerungen entsprechend ausgelegt, wobei die Kulissenbahn 17a insgesamt eine größere Krümmung aufweist als die Kulissenbahn 17b.

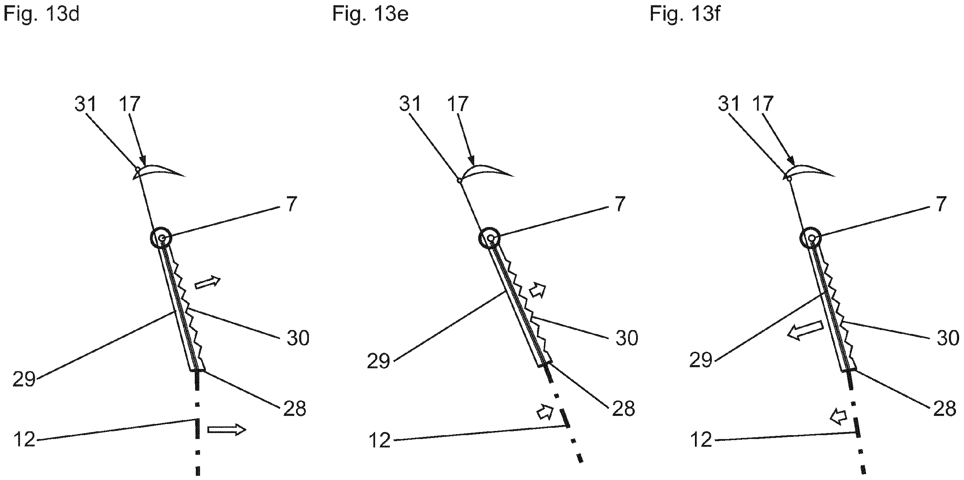

In den Figuren 13a bis 13f sind zeitlich aufeinanderfolgende Positionen des "hebenden" Beines während eines Schrittes dargestellt. Durch das über die Kulissenbahnen 17a und 17b zwangsgesteuerte Verbindungselement 29 werden der Gelenkarm 28 und damit das Kniegelenk 10 derart bewegt, dass sich der Kniewinkel β, β' entsprechend des realen Bewegungsablaufs eines Beines während eines Schrittes ändert. Fig. 13a zeigt die hinterste Position des Beines vor dem Anheben, Fig. 13b und 13c zeigen Positionen während des Hebens, Fig. 13d zeigt eine Position unmittelbar vor dem "Auftreten". Währenddessen fährt das Gleitelement 31 entlang der Kulissenbahn 17a. Fig. 13e entspricht der Beinposition in der vordersten Lage - beim "Auftreten". Das Gleitelement 31 befindet sich an seinem "Wendepunkt". In Fig. 13f bewegt sich das Bein wieder rückwärts, das Gleitelement 31 hat gerade begonnen, der Kulissenbahn 17b entlang zu fahren.

In Fig. 12a bis 12c ist eine Möglichkeit angedeutet, das Gleitelement 31 mittels einer schwenkbar angeordneten und federbelasteten Klappe 34 von der Kulissenbahn 17a auf die Kulissenbahn 17c zu leiten.

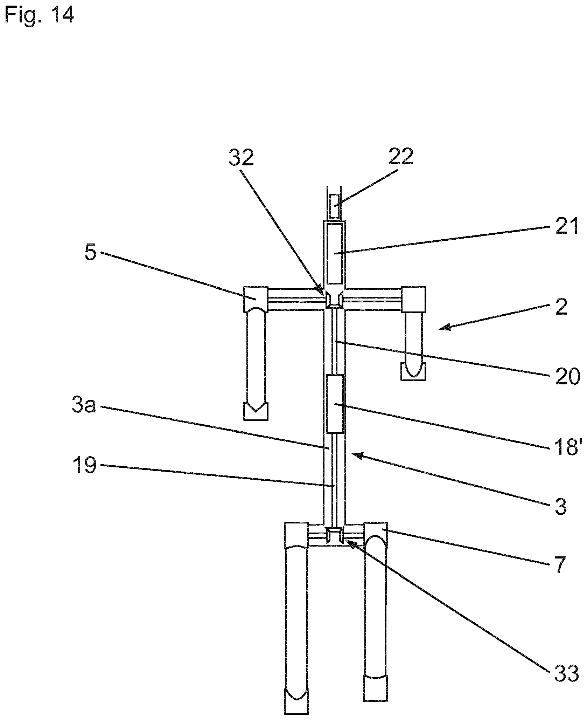

Eine weitere Variante eines Bewegungsmechanismus zeigt schematisch Fig. 14. In der zentralen Säule 3a des Rumpfskelettes 3 ist eine Antriebseinheit 18' eingebaut, welche einen Motor mit asynchronem Antrieb für Arm- und Beinbewegungen aufweist, welcher Wellen 19, 20, insbesondere aus Kohlenstofffaser-Verbund-Kunststoff, antreibt, welche über Winkelgetriebe 32, 33 entsprechende Drehbewegungen der Schultergelenke 5 und der Hüftgelenke 7 bewirkt. Zur Spannungsversorgung der Antriebseinheit 18' ist in der zentralen Säule 3a des Rumpfskeletts 3 ein Akkupack 21 angeordnet. Die Empfänger/Steuereinheit 22 kann über Funk die Relativgeschwindigkeit Vᵣₑₗ bzw. ein mit dieser korrelierendes Signal empfangen, verarbeitet dieses und stellt die Steuergrößen für die Antriebseinheit 18' zur Verfügung.

Die Anbindung des Dummy-Objekts 1 an ein Bewegungssystem kann über die mit dem Skelett 2 fest verbundene Stange 15 und die zusätzlichen Seile 16 aus Aramid-Fasern, PP-Fasern oder PE-Fasern erfolgen. Das Dummy-Objekt 1 kann an ein auf einem Gestell positionierten Schienensystem, an ein am Boden angeordnetes Fahrpodest oder einen Wagen oder ein seitlich der Fahrtrichtung des Fahrzeuges angeordnetes Schienen- oder Seilzugsystem angebunden werden. Die Anbindung mit Stangen und/oder Seilen und sonstigen Elementen soll optisch möglichst unauffällig, daher mit kleinem Querschnitt, und aus einem radar-unsichtbaren Material sein. Durch die zusätzlichen Seile 16, die das Dummy-Objekt 1 zum Bewegungssystem verspannen, können Schwingungen des Dummy-Objekts 1 zu den Anbindungsstellen durch äußere Einflüsse, wie beispielsweise Wind, weitgehend vermieden werden.

Das Bewegungssystem ist ein Teil des Gesamtsystems und ermöglicht eine kontrollierte und reproduzierbare Bewegung des Dummy-Objekts.

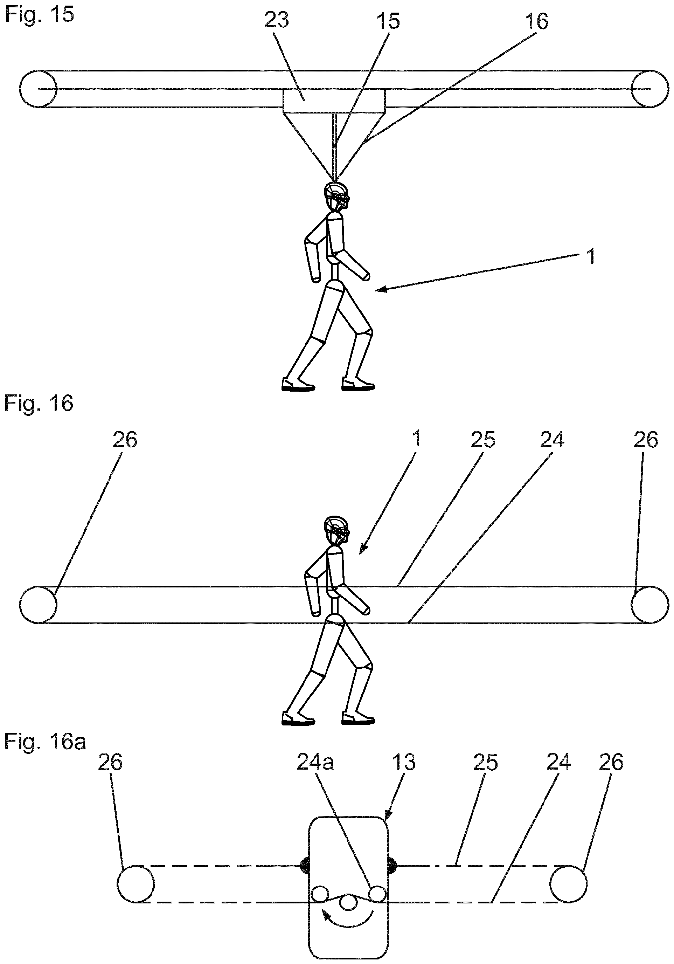

Fig. 15 zeigt schematisch ein Schienensystem, mittels welchem ein Dummy-Objekt 1 von oben bewegt wird. Die Anbindungselemente des Dummy-Objekts 1, die Stange 15 und die Seile 16, sind fest mit einer Laufkatze 23 verbunden, welche beispielsweise über einen Zahnriemen an einen Antriebsmotor gekoppelt ist, sodass eine definierte Bewegung des Dummy-Objekts 1 und eine definierte Antriebsgeschwindigkeit und damit die Relativgeschwindigkeit Vᵣₑₗ eingestellt werden können. Die jeweilige Antriebsgeschwindigkeit wird vom Antriebsmotor per Funk an die Empfänger/Steuereinheit 22 im Dummy-Objekt 1 übertragen.

Bei der in Fig. 16 und 16a schematisch gezeigten Variante eines Bewegungssystems ist ein Seilsystem mit einem Tragseil 24 und einem Zugseil 25 vorgesehen. Der Rumpf 13 des Dummy-Objekts 1 ist am Tragseil 24 mittels Rollen 24a gleitend und rollend aufgehängt, das Zugseil 25 ist am Rumpf 13 befestigt und über zwei Rollen 26 umgelenkt und geführt. Bei einer der Rollen 26 ist ein Antrieb für das Zugseil 25 vorgesehen. Die Relativgeschwindigkeit Vᵣₑₗ kann über eine Schlepprolle 24b am Tragseil 24 im Rumpf 13 direkt ermittelt werden, oder es kann die Antriebsgeschwindigkeit vom Antriebsmotor per Funk an die Empfänger/Steuereinheit 22 übertragen werden.

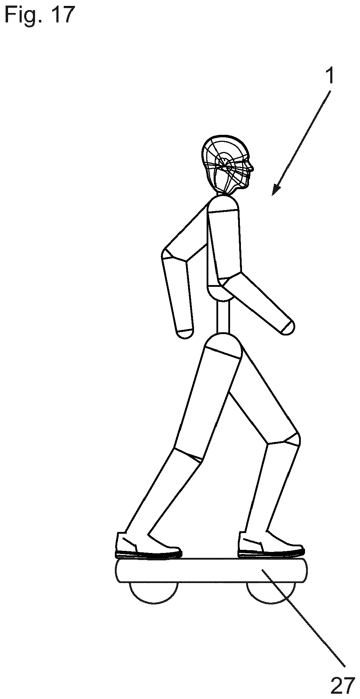

Bei einer weiteren, in Fig. 17 gezeigten Ausführungsvariante des Bewegungssystems ist ein Wagen 27, ein Fahrroboter oder Fahrpodest vorgesehen. Der Wagen 27 kann ferngesteuert sein, oder mit einem Seil- oder Zahnriemenantrieb verbunden sein. Über die Antriebsrollen des Wagens 27 kann die Relativgeschwindigkeit Vᵣₑₗ direkt, auch kabelgebunden, an den Bewegungsmechanismus des Dummy-Objekts 1 für die Bein- und Armbewegungen übertragen werden, wobei kein Empfänger notwendig ist. Alternativ ist es möglich, dass der Wagen 27 über einen eigenen Antrieb verfügt.

Um ein Dummy-Objekt 1 gemäß der Erfindung möglichst flexibel bei bereits bestehenden Bewegungssystemen verwenden zu können, ist eine Sendestation für Daten vorgesehen, die an das Dummy-Objekt 1 übertragen werden. So kann beispielsweise die Drehzahl des Antriebsystems dafür herangezogen werden, entsprechende Daten per Funk oder W-LAN, welche proportional zur Relativgeschwindigkeit Vᵣₑₗ sind, zu übertragen. Des Weiteren kann ein im Rumpf 13 des Dummy-Objekts angeordneter Entfernungsmesser, beispielsweise auf Basis von Ultraschall, Laser, Infrarotlicht oder Radar, dazu verwendet werden, die Entfernung des Dummy-Objekts 1 zu einem entfernteren Gegenstand zu bestimmen. Aus dieser Messung kann die Relativgeschwindigkeit Vᵣₑₗ errechnet werden, welche wiederum die inneren Bewegungen des Dummy-Objekts 1 steuert. Es ist ferner möglich, über ein Positionserkennungssystem (mittels Transponder oder Differenz-GPS) die Geschwindigkeit per Funk oder W-LAN an das Dummy-Objekt 1 zu übertragen.

Erfindungsgemäß ausgeführte Dummy-Objekte lassen sich auch als Radfahr-Dummies einsetzen. Dazu wird der gemäß der Erfindung entsprechend bewegliche Dummy fest mit einem Fahrradrahmen verbunden. Dabei kann ein am Fahrradrahmen angeordneter Antriebsmotor über die Pedale die Beine bewegen, die Arme, der Rumpf und der Kopf werden nicht bewegt.

### BEZUGSZEICHENLISTE:

- 1: Dummy-Objekt
- 2: Skelett
- 3: Rumpfskelett
- 3a: zentrale Säule
- 3'a: Halsabschnitt
- 3b: Schulterteil
- 3c: Beckenteil
- 3d: Stützelement
- 4: Oberarmelement
- 4a: Oberarm
- 5: Schultergelenk
- 6: Oberschenkelelement
- 6a: Oberschenkel
- 7: Hüftgelenk
- 8: Kopf
- 9: Ellbogengelenk
- 10: Kniegelenk
- 11: Unterarme
- 12: Unterschenkel
- 13: Rumpf
- 14: Fußteil
- 15: Stange
- 16: Seil
- 17: Kulissenteil
- 17a: Kulissenbahn
- 17b: Kulissenbahn
- 18: Antriebseinheit
- 18': Antriebseinheit
- 19: Welle
- 20: Welle
- 21: Akkupack
- 21': Akkupack
- 22: Empfänger/Steuereinheit
- 23: Laufkatze
- 24: Tragseil
- 24a: Rolle
- 24b: Schlepprolle
- 25: Zugseil
- 26: Rolle
- 27: Wagen
- 28: Gelenkarm
- 29: Verbindungselement
- 30: Verbindungselement
- 31: Gleitelement
- 32: Winkelgetriebe
- 33: Winkelgetriebe
- 34: Klappe
- α_{g}: Grenzwinkel
- α'_{g}: Grenzwinkel
- α: Beinwinkel
- α': Beinwinkel
- β_{g}: Grenzwinkel
- β'_{g}: Grenzwinkel
- β: Kniewinkel
- β': Kniewinkel
- γ: Armwinkel
- γ': Armwinkel
- δ: Ellbogenwinkel
- δ': Ellbogenwinkel
- Vᵣₑₗ: Relativgeschwindigkeit

## Patentansprüche

1. Dreidimensionales Dummy-Objekt (1), insbesondere zur Funktionsüberprüfung von Fahrerassistenzsystemen in Kraftfahrzeugen, mit einem Skelett (2) sowie beweglichen Armen und beweglichen Beinen, wobei das Skelett (2) ein Hohlräume aufweisendes Rumpfskelett (3) mit einer zentralen Säule (3a) aufweist, wobei die Arme und Beine mit dem Rumpfskelett (3) gelenkig verbunden sind, wobei die Beine jeweils einen Oberschenkel (6a) und einen mit diesem gelenkig verbundenen Unterschenkel (12) aufweisen, wobei im Rumpfskelett (3) eine Antriebseinheit (18, 18') und eine Empfänger/ Steuereinheit (22) eingebaut sind, welche als Eingangsgröße mit der Relativgeschwindigkeit (Vᵣₑₗ) des bewegten Dummy-Objekts (1) korrelierende Signale erhält,
**dadurch gekennzeichnet,**
**dass** die Bewegungsmuster der Ober- und Unterschenkel (6a, 12) in Abhängigkeit von der Relativgeschwindigkeit (Vᵣₑₗ) des Dummy-Objekts (1) mittels eines eingebauten Bewegungsmechanismus veränderbar sind, wobei die Bewegungsmuster Änderungen der Beingrenzwinkel (α_{g}, α'_{g}) zwischen dem Oberschenkel (6a) und der zentralen Säule (3a) des Rumpfskeletts (3) sowie der Kniegrenzwinkel (β_{g}, β'_{g}) zwischen Oberschenkel (6a) und Unterschenkel (12) beinhalten.

2. Dummy-Objekt (1) nach Anspruch 1, **dadurch gekennzeichnet, dass** das Dummy-Objekt (1) einen Kopf (8), der von der zentralen Säule (3a) getragen wird, aufweist, und dass das Rumpfskelett (3) zusätzlich zu der zentralen Säule (3a) zwei Schulterteile (3b) und zwei Beckenteile (3c) aufweist.

3. Dummy-Objekt (1) nach Anspruch 1 oder 2, **dadurch gekennzeichnet,**
**dass** die Arme zu den Beinen gegengleich bewegbar sind, und/oder
**dass** die Unterschenkel (12) mit den Oberschenkeln (6a) mechanisch bewegungsgekoppelt sind.

4. Dummy-Objekt (1) nach einem der Ansprüche 1 bis 3, **dadurch gekennzeichnet, dass** die Arme jeweils einen Oberarm (4a) und einen mit diesem gelenkig verbundenen Unterarm (11) aufweisen, wobei Oberarm (4a) und Unterarm (11) nach Bewegungsmustern bewegbar sind, welche in Abhängigkeit von der Relativgeschwindigkeit (Vᵣₑₗ) des Dummy-Objekts (1) mittels eines eingebauten Bewegungsmechanismus veränderbar sind.

5. Dummy-Objekt (1) nach Anspruch 4, **dadurch gekennzeichnet, dass** die Bewegungsmuster der Arme Änderungen der Armwinkel (γ, γ') zwischen dem Oberarm (4a) und der zentralen Säule (3a) des Rumpfskeletts (3) und der Ellbogenwinkel (δ, δ') zwischen dem Oberarm (4a) und dem Unterarm (11) beinhalten.

6. Dummy-Objekt (1) nach Anspruch 4 oder 5, **dadurch gekennzeichnet,**
**dass** die Unterarme (11) mit den Oberarmen (4a) mechanisch bewegungsgekoppelt sind.

7. Dummy-Objekt (1) nach einem der Ansprüche 4 bis 6, **dadurch gekennzeichnet,**
**dass** jeder Oberarm (4a) als weiteren Skelettteil je ein Oberarmelement (4) aufweist und/oder
**dass** jeder Oberschenkel (6a) als weiteren Skelettteil je ein Oberschenkelelement (6) aufweist.

8. Dummy-Objekt (1) nach einem der Ansprüche 1 bis 7, **dadurch gekennzeichnet, dass** in der zentralen Säule (3a) ein Akkupack (21, 21') eingebaut ist.

9. Dummy Objekt (1) nach einem der Ansprüche 1 bis 8, **dadurch gekennzeichnet, dass** das Rumpfskelett (3) einteilig ausgeführt ist.

10. Dummy-Objekt (1) nach einem der Ansprüche 2 bis 9, **dadurch gekennzeichnet, dass** die zentrale Säule (3a) mit einer den Kopf (8) überragenden Stange (15), welche ein Anbindungselement zu einem Bewegungssystem bildet, fest verbunden ist, wobei beispielsweise die zentrale Säule (3a) mit Seilen (16), insbesondere aus Aramid-Fasern, PP-Fasern oder PE-Fasern, welche weitere Anbindungselemente zu einem Bewegungssystem bilden, fest verbunden ist.

11. Dummy-Objekt (1) nach einem der Ansprüche 1 bis 7, **dadurch gekennzeichnet, dass** der Bewegungsmechanismus zumindest in einigen Gelenken (5, 7, 9, 10) angeordnete Servoantriebe aufweist.

12. Dummy-Objekt (1) nach Anspruch 3 und Anspruch 6 oder 7, **dadurch gekennzeichnet, dass** der Koppelungsmechanismus einen mit dem Rumpfskelett (3) fest verbundenen Kulissenteil (17), einen mit dem Ellbogengelenk (9) bzw. dem Kniegelenk (10) fest verbundenen Gelenkarm (28), ein starres Verbindungselement (29) zwischen Gelenkarm (28) und Kulissenteil (17) und ein elastisches Verbindungselement (30) zwischen dem Gelenkarm (28) und dem Rumpfskelett (3) aufweist.

13. Dummy-Objekt (1) nach Anspruch 12, **dadurch gekennzeichnet, dass** das starre Verbindungselement (29) ein mit dem Kulissenteil (17) wirkverbundenes Gleitelement (31) aufweist, wobei beispielsweise der Kulissenteil (17) zumindest eine Kulissenbahn (17a, 17b) für das Gleitelement (31) aufweist, und insbesondere der Kulissenteil (17) zwei unterschiedlich geformte Kulissenbahnen (17a, 17b), die ineinander übergehen, aufweist.

14. Dummy-Objekt nach einem der Ansprüche 1 bis 7, **dadurch gekennzeichnet, dass** der Bewegungsmechanismus eine Antriebseinheit (18') mit einem Motor mit asynchronem Antrieb aufweist, welcher zwei Wellen (19, 20) antreibt, die über Winkelgetriebe (32, 33) die Schultergelenke (5) und die Hüftgelenke (7) in Drehbewegung versetzen.

15. Dummy-Objekt nach einem der Ansprüche 2 bis 14, **dadurch gekennzeichnet, dass** eine der folgenden Ausführungen realisiert ist:
die zentrale Säule (3a) ist mit einer den Kopf überragenden Stange fest verbunden und bildet die Anbindung zu einem oben angeordneten Schienensystem und wird über Zahnriemenlineartrieb oder dergleichen bewegt,
die zentrale Säule (3a) ist in der Mitte seitlich mit einer Stange fest verbunden und bildet die Anbindung zu einem seitlich angeordneten Schienensystem und wird über Zahnriemenlineartrieb oder dergleichen bewegt,
die zentrale Säule (3a) ist auf einem Tragseil rollend aufgehängt und über wird ein Zugseil oder Zahnriemenlineartrieb in Bewegung versetzt,
die zentrale Säule (3a) ist unten mit einer Stange fest verbunden und bildet die Anbindung zu einem unten angeordneten Bewegungssystem, Fahrpodest oder dergleichen und wird dadurch bewegt.

## Claims

1. Three-dimensional dummy object (1), in particular for functionally testing of driver assistance systems in motor vehicles, the dummy object having: a skeleton (2) as well as movable arms and movable legs, wherein the skeleton (2) has a torso skeleton (3) having hollow spaces and having a central column (3a), wherein the legs and the arms are hingedly connected to the torso skeleton (3), wherein the legs each have a thigh (6a) und a shank (12) hingedly connected thereto, wherein a drive unit (18, 18') and a receiver/control unit (22) are built-in in the torso skeleton (3), which receiver/control unit receives, as an input quantity, signals correlating with the relative velocity (Vᵣₑₗ) of the moved dummy object (1),
**characterized in that**
the movement patterns of the thighs and the shanks (6a, 12) are changeable as a function of the relative velocity (Vᵣₑₗ) of the moved dummy object (1) by means of a built-in movement mechanism, wherein the movement patterns include changes of the leg limit angles (α_{g}, α'_{g}) between the thigh (6a) and the central column (3a) of the torso skeleton (3) as well as of the knee limit angles (β_{g}, β'_{g}) between the thigh (6a) and the shank (12).

2. Dummy object (1) according to claim 1, **characterized in that** the dummy object (1) has a head (8) which is supported by the central column (3a), and that the torso skeleton (3) has, in addition to the central column (3a), two shoulder parts (3b) and two pelvis parts (3c).

3. Dummy object (1) according to claim 1 or 2, **characterized in**
**that** the arms are moveable oppositely and symmetrically to the legs, and/or
**that** the shanks (12) are mechanically coupled in respect of the movement to the thighs (6a).

4. Dummy object (1) according to any one of the claims 1 to 3, **characterized in that** the arms each have an upper arm (4a) and a lower arm (11) hingedly connected thereto, wherein upper arm (4a) and lower arm (11) are moveable according to movement patterns which are changeable as a function of the relative velocity (Vᵣₑₗ) of the dummy object (1) by means of a built-in movement mechanism.

5. Dummy object (1) according to claim 4, **characterized in that** the movement patterns of the arms include changes of the arm angles (γ, γ') between the upper arm (4a) and the central column (3a) of the torso skeleton (3) and of the elbow angles (δ, δ') between the upper arm (4a) and the lower arm (11).

6. Dummy object (1) according to claim 4 or 5, **characterized in**
**that** the lower arms (11) are mechanically coupled in respect of the movement to the upper arms (4a).

7. Dummy object (1) according to any one of the claims 4 to 6, **characterized in**
**that** each upper arm (4a) has, as a further skeleton part, respectively, one upper arm element (4) and/or
**that** each thigh (6a) has, as a further skeleton part, respectively, one thigh element (6).

8. Dummy object (1) according to any one of the claims 1 to 7, **characterized in that** a battery pack (21, 21') is built-in in the central column (3a).

9. Dummy object (1) according to any one of the claims 1 to 8, **characterized in that** the torso skeleton (3) is embodied as one piece.

10. Dummy object (1) according to any one of the claims 2 to 9, **characterized in that** the central column (3a) is fixedly connected to a bar (15) which projects beyond the head (8) and which forms a junction element to a movement system, wherein for example the central column (3a) is fixedly connected to ropes (16), in particular made of aramid fibers, PP fibers or PE fibers, which ropes form further junction elements to a movement system.

11. Dummy object (1) according to any one of the claims 1 to 7, **characterized in that** the movement mechanism has servo drives which are arranged at least on some of the hinges (5, 7, 9, 10).

12. Dummy object (1) according to claim 3 and claim 6 or 7, **characterized in that** the coupling mechanism has a connecting link portion (17) which is fixedly connected to the torso skeleton (3), a hinge arm (28) which is fixedly connected to the elbow hinge (9) and/or to the knee hinge (10), a rigid junction element (29) between the hinge arm (28) and the connecting link portion (17), and an elastic junction element (30) between the hinge arm (28) and the torso skeleton (3).

13. Dummy object (1) according to claim 12, **characterized in that** the rigid junction element (29) has a slide element (31) which is impactingly connected to the connecting link portion (17), wherein for example the connecting link part (17) has at least one connecting link rail (17, 17b) for the slide element (31), and wherein in particular the connecting link portion (17) has two connecting link rails (17a, 17b) which are shaped differently and which merge with each other.

14. Dummy object (1) according to any one of the claims 1 to 7, **characterized in that** the drive mechanism has a drive unit (18') having a motor having an asynchronous drive, which drives two drive shafts (19, 20) which set the shoulder hinges (5) and the pelvis hinges (7) in a rotational movement via angular gears (32, 33).

15. Dummy object (1) according to any one of the claims 2 to 14, **characterized in that** one of the following embodiments is realized:
the central column (3a) is fixedly connected to a rod, which extends beyond the head, and forms the junction to a rail system arranged at the top, and is moved via a toothed belt linear drive or the like,
the central column (3a) is fixedly connected in the center laterally to a rod, and forms the junction to a rail system arranged on the side, and is moved via a toothed belt linear drive or the like,
the central column (3a) is rollingly suspended on a supporting cable, and is moved via a pulling cable or a toothed belt linear drive,
the central column (3a) is fixedly connected to a rod at the bottom, and forms the junction to a movement system, a driving pedestal or the like arranged at the bottom, and is moved thereby.

## Revendications

1. Objet factice (1) tridimensionnel, en particulier servant à vérifier le fonctionnement de systèmes d'aide à la conduite dans des véhicules automobiles, avec un squelette (2) ainsi que des bras mobiles et des jambes mobiles, dans lequel le squelette (2) présente un squelette de tronc (3) présentant des cavités avec une colonne centrale (3a), dans lequel les bras et jambes sont reliés de manière articulée au squelette de tronc (3), dans lequel les jambes présentent respectivement une jambe supérieure (6a) et une jambe inférieure (12) reliée de manière articulée à cette dernière, dans lequel une unité d'entraînement (18, 18') et une unité de réception/de commande (22) sont intégrées dans le squelette de tronc (3), laquelle contient en tant que grandeur de départ des signaux en corrélation avec la vitesse relative (Vᵣₑₗ) de l'objet factice (1) déplacé,
**caractérisé en ce**
**que** les modèles de déplacement des jambes supérieures et inférieures (6a, 12) peuvent être modifiés en fonction de la vitesse relative (Vᵣₑₗ) de l'objet factice (1) au moyen d'un mécanisme de déplacement intégré, dans lequel les modèles de déplacement contiennent des modifications des angles limite de jambe (α_{g}, α'_{g}) entre la jambe supérieure (6a) et la colonne centrale (3a) du squelette de tronc (3) ainsi que des angles limite de genou (β_{g}, β'_{g}) entre la jambe supérieure (6a) et la jambe inférieure (12).

2. Objet factice (1) selon la revendication 1, **caractérisé en ce que** l'objet factice (1) présente une tête (8), qui est supportée par la colonne centrale (3a), et que le squelette de tronc (3) présente en plus de la colonne centrale (3a), deux parties d'épaule (3b) et deux parties de bassin (3c).

3. Objet factice (1) selon la revendication 1 ou 2, **caractérisé en ce**
**que** les bras peuvent être déplacés de manière opposée en miroir par rapport aux jambes, et/ou
**que** les jambes inférieures (12) sont couplées en déplacement de manière mécanique avec les jambes supérieures (6a).

4. Objet factice (1) selon l'une quelconque des revendications 1 à 3, **caractérisé en ce que** les bras présentent respectivement un bras supérieur (4a) et un bras inférieur (11) relié de manière articulée à ce dernier, dans lequel les bras supérieur (4a) et bras inférieur (11) peuvent être déplacés selon des modèles de déplacement, qui peuvent être modifiés en fonction de la vitesse relative (Vᵣₑₗ) de l'objet factice (1) au moyen d'un mécanisme de déplacement intégré.

5. Objet factice (1) selon la revendication 4, **caractérisé en ce que** les modèles de déplacement des bras contiennent des modifications des angles de bras (γ, γ') entre le bras supérieur (4a) et la colonne centrale (3a) du squelette de tronc (3) et des angles de coude (δ, δ') entre le bras supérieur (4a) et le bras inférieur (11).

6. Objet factice (1) selon la revendication 4 ou 5, **caractérisé en ce**
**que** les bras inférieurs (11) sont couplés en déplacement de manière mécanique avec les bras supérieurs (4a) .

7. Objet factice (1) selon l'une quelconque des revendications 4 à 6, **caractérisé en ce**
**que** chaque bras supérieur (4a) présente en tant qu'autre partie de squelette respectivement un élément de bras supérieur (4), et/ou
**que** chaque jambe supérieure (6a) présente en tant qu'autre partie de squelette respectivement un élément de jambe supérieure (6).

8. Objet factice (1) selon l'une quelconque des revendications 1 à 7, **caractérisé en ce qu'**un bloc de batteries (21, 21') est intégré dans la colonne centrale (3a) .

9. Objet factice (1) selon l'une quelconque des revendications 1 à 8, **caractérisé en ce que** le squelette de tronc (3) est réalisé en une seule partie.

10. Objet factice (1) selon l'une quelconque des revendications 2 à 9, **caractérisé en ce que** la colonne centrale (3a) est reliée de manière solidaire à une tige (15) dépassant de la tête (8), laquelle forme un élément de raccordement à un système de déplacement, dans lequel par exemple la colonne centrale (3a) est reliée de manière solidaire à des câbles (16), en particulier composés de fibres d'aramide, de fibres de PP ou de fibres de PE, qui forment d'autres éléments de raccordement à un système de déplacement.

11. Objet factice (1) selon l'une quelconque des revendications 1 à 7, **caractérisé en ce que** le mécanisme de déplacement présente au moins des servomoteurs disposés dans certaines articulations (5, 7, 9, 10).

12. Objet factice (1) selon la revendication 3 et la revendication 6 ou 7, **caractérisé en ce que** le mécanisme de couplage présente une partie de coulisse (17) reliée de manière solidaire au squelette de tronc (3), un bras articulé (28) relié de manière solidaire à l'articulation de coude (9) ou à l'articulation de genou (10), un élément de liaison (29) rigide entre le bras articulé (28) et la partie de coulisse (17), et un élément de liaison (30) élastique entre le bras articulé (28) et le squelette de tronc (3).

13. Objet factice (1) selon la revendication 12, **caractérisé en ce que** l'élément de liaison (29) rigide présente un élément coulissant (31) relié de manière fonctionnelle à la partie de coulisse (17), dans lequel par exemple la partie de coulisse (17) présente au moins une voie de coulisse (17a, 17b) pour l'élément coulissant (31), et en particulier la partie de coulisse (17) présente deux voies de coulisse (17a, 17b) de forme différente, qui s'imbriquent l'une dans l'autre.

14. Objet factice selon l'une quelconque des revendications 1 à 7, **caractérisé en ce que** le mécanisme de déplacement présente une unité d'entraînement (18') avec un moteur avec un entraînement asynchrone, lequel entraîne deux arbres (19, 20), qui amènent en déplacement par rotation les articulations d'épaule (5) et les articulations de hanche (7) par l'intermédiaire d'engrenages d'angle (32, 33).

15. Objet factice selon l'une quelconque des revendications 2 à 14, **caractérisé en ce qu'**une des réalisations suivantes est réalisée :
la colonne centrale (3a) est reliée de manière solidaire à une tige dépassant de la tête et forme le raccordement à un système de rails disposé en haut et est déplacée par l'intermédiaire d'un système moteur linéaire à courroie dentée ou similaire,
la colonne centrale (3a) est reliée de manière solidaire au centre de manière latérale à une tige et forme le raccordement à un système de rails disposé de manière latérale et est déplacée par l'intermédiaire d'un système moteur linéaire à courroie dentée ou similaire,
la colonne centrale (3a) est suspendue de manière roulante sur un câble porteur et est amenée en déplacement par l'intermédiaire d'un câble de traction ou d'un système moteur linéaire à courroie dentée,
la colonne centrale (3a) est reliée de manière solidaire en bas à une tige, et
forme le raccordement à un système de déplacement disposé en bas, une plate-forme mobile ou similaire et est de ce fait déplacée.
